# EUROPEAN PATENT SPECIFICATION

(11) **EP 3 274 881 B1**
(45) Date of publication and mention of the grant of the patent: **13.03.2024**
(21) Application number: 16769209.4
(22) Date of filing: 09.02.2016
(51) Int. Cl.: G06F 30/392, G06F 119/06, G06F 119/12

(54) **METHOD AND APPARATUS FOR IMPROVING PERFORMANCE AND POWER IN AN ELECTRONIC DESIGN USING STANDARD CELLS**
VERFAHREN UND VORRICHTUNG ZUR VERBESSERUNG DER LEISTUNG UND ENERGIE IN EINEM ELEKTRONISCHEN ENTWURF MIT STANDARDZELLEN
PROCÉDÉ ET APPAREIL DESTINÉS À L'AMÉLIORATION DU RENDEMENT ET DE LA PUISSANCE DANS UNE CONCEPTION ÉLECTRONIQUE AU MOYEN DE CELLULES STANDARD

(30) Priority: 25.03.2015 US 201514668687
(43) Date of publication of application: 31.01.2018
(73) Proprietor: Intel Corporation, Santa Clara, CA 95054 (US)
(72) Inventor: BOU-GHAZALE, Silvio, Hillsboro, Oregon 97124 (US); YOUNG, Anthony, Chandler, Arizona 85226 (US); VOGS, Andre, Beaverton, Oregon 97007 (US)
(74) Representative: Goddar, Heinz J.
(86) International application number: PCT/US2016/017180
(87) International publication number: WO 2016/153611

(56) References cited:
- WO-A1-2014/159190
- US-A1- 2011 282 478
- US-A1- 2013 275 935
- US-A1- 2014 183 646
- US-A1- 2014 258 960
- US-B1- 6 269 468
- US-B1- 8 607 184
- US-B1- 8 607 184
- DATTA A ET AL: "Modeling and Circuit Synthesis for Independently Controlled Double Gate FinFET Devices", IEEE TRANSACTIONS ON COMPUTER AIDED DESIGN OF INTEGRATED CIRCUITS AND SYSTEMS, IEEE SERVICE CENTER, PISCATAWAY, NJ, US, vol. 26, no. 11, November 2007 (2007-11), pages 1957-1966, XP011194551, ISSN: 0278-0070, DOI: 10.1109/TCAD.2007.896320

## Description

### FIELD OF THE INVENTION

Embodiments of the present invention relate to the field of electronic design automation tools; more particularly, embodiments of the present invention relate to replacing high drive 1-stage standard cells with 2-stage variations of the cells to enable upsizing drive power of a cell in a logic path in an electronic design.

### BACKGROUND OF THE INVENTION

Current design practices assume that the synthesis and place-and-route tools can select appropriate cells correctly and rely on making the cells available for the tool. Current practices do not categorize the collateral based on attributes that make them easier for the synthesis and place-and-route tools to "easily consume" the collateral.

Current commercially-available synthesis and place-and-route tools rely on simplified algorithms to meet timing closure. Such algorithms produce predictable results when the cells are organized in families with known progressions along the power, delay, or area curves. For example, if one wanted to upsize a drive for the next stage by increasing the power of the output driver, it is known that this would not impact the size of the input.

However, in FinFET, or tri-gate designs, there is a link between the size of the output drive and the input of the cell. Thus, an upsizing of the output device causes issues on the input side. In particular, when 1-stage cells (described next) with varying drive strengths are introduced in a logic path, and when upsized along the path by selecting another 1-stage cell with a higher drive, its drive strength, especially in a FinFET-based standard-cell, is transparently seen by the previous stage as an added pin capacitance. This results in an increased load on the previous stage, thus slowing it down. This second-order effect can cause an optimization engine to oscillate in the path to closure and achieve erratic results. As a result, the tools end-up oscillating in the timing closure phase, producing long run-times and producing erratic results when undergoing performance optimization of a critical path. Thus, commercial design optimization tools using FinFET technology collateral have not been producing optimum FinFET-based designs. XP011194551 discloses "Modeling and Circuit Synthesis for Independently Controlled Double Gate FinFET Devices" and US8607184B1 relates to methods reduce the number of newly created cells when creating new cells to optimize a design.

### BRIEF DESCRIPTION OF THE DRAWINGS

The present invention will be understood more fully from the detailed description given below and from the accompanying drawings of various embodiments of the invention, which, however, should not be taken to limit the invention to the specific embodiments, but are for explanation and understanding only.
**Figure 1** is a flow diagram of one embodiment of a process for creating an integrated circuit design.
**Figure 2** is a flow diagram illustrating one embodiment of a process for creating variations of standard cells in 2-stage form from standard cells in 1-stage form.
**Figure 3** illustrates a typical layout structure of a 1-stage cell.
**Figure 4** illustrates a typical layout structure of a 2-stage cell.
**Figure 5** illustrates an implementation of the higher drive output driver of Figure 4.
**Figure 6** illustrates an example of a 2-stage standard cell created from a 1-stage standard cell.
**Figure 7** illustrates a system for creating designs of an integrated circuit according to an embodiment of the present invention.
**Figure 8** illustrates an integrated circuit design using FinFET standard cells according to an embodiment of the present invention.
**Figure 9** illustrates one embodiment of a process for creating electronic designs (e.g., FinFET designs).

### DETAILED DESCRIPTION OF THE PRESENT INVENTION

In the following description, numerous details are set forth to provide a more thorough explanation of the present invention. It will be apparent, however, to one skilled in the art, that the present invention may be practiced without these specific details. In other instances, well-known structures and devices are shown in block diagram form, rather than in detail, in order to avoid obscuring the present invention.

A method and apparatus for improving performance in electronic device designs are disclosed. In one embodiment, the performance and dynamic power of the designs are improved using the techniques disclosed herein. In one embodiment, the designs are FinFET designs. In one embodiment, the performance and dynamic power of the designs are improved using segregated 1-stage and 2-stage standard cell collateral (library).

By separating the standard cells and selectively augmenting the collateral using the criteria described herein, optimization algorithms can consume the collateral easily, thereby enabling them to reach a design optimum quickly and efficiently. In one embodiment, embodiments disclosed herein provide collateral pruning and selective collateral augmentation techniques to ensure smooth optimization cost-functions to enable the synthesis and place-and-route tools to reach optimum design points in power and performance much quicker and with better quality of results.

In one embodiment, the collateral pruning comprises eliminating higher drive versions of the 1-stage cells, and presenting only the minimum drive 1-stage cells to the design optimization tools. This achieves an elastic collateral along the power/performance curves and helps eliminate the second-order effect of slowing down previous stages of a critical timing path, when attempting to speed-up a particular cell along the path.

In one embodiment, the collateral augmentation procedure comprises creating numerous variations of standard-cell logic families in 2-stage form from 1-stage standard cells and with the full-range of drive strengths. In one embodiment, this is achieved ensuring that all timing arcs are separated from the output by more than 1 stage and ensuring the first stage is of minimal size driver. In one embodiment, the collateral augmentation procedure also creates, for 1-stage cells, a function of logic cells with only minimum drive. Such cells are useful for local engineering change orders (ECOs).

In one embodiment, the collateral augmentation procedure further creates, for every 1-stage cell, inverted and buffered versions with multiple drive strengths, essentially transforming them into simple 2-stage cells. These may be used in an ECO's driving of medium to long range wires, while ensuring the first stage is of minimal size driver.

In one embodiment, the selective collateral augmentation comprises eliminating 1-stage arcs of high drive cells. In this case, every timing arc of each non-minimum drive cells is examined in order to identify timing arcs within the cell that form a single stage device to the cell output. For each such arc, a minimum size input stage inverter (preferable) or buffer is added. Since logic functions are modified by adding inverters, the collateral is also augmented by the cell's complement for logic completeness. More specifically, in one embodiment, the synthesis tool uses cell variants with various permutations of inverted inputs or outputs to allow it to reduce the use of stand-alone inverters in the design. The pulling of such inverters into the cell will have the added benefit of transforming 1-stage cell arcs into 2-stage arcs, ensuring the entire cell is a 2-stage cell.

Using the collateral pruning and the selective collateral augmentation disclosed herein reduces the erratic behavior and enable commercial tools to produce design implementations (e.g., FinFET design implementations) with improved performance and dynamic power.

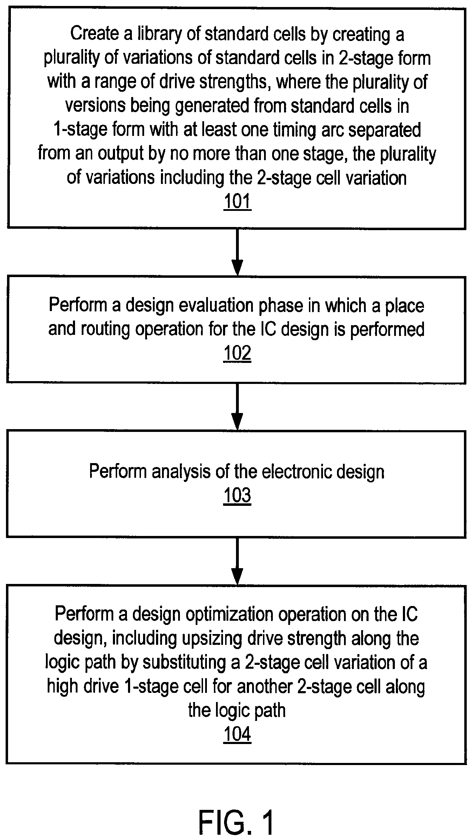

Figure 1 is a flow diagram of one embodiment of a process for creating an integrated circuit design. The process is performed by processing logic that may comprise hardware (circuitry, dedicated logic, etc.), software (such as is run on a general purpose computer system or a dedicated machine), or a combination of both.

Referring to Figure 1, the process begins by processing logic creating a library of standard cells by creating a plurality of variations of standard cells in 2-stage form with a range of drive strengths, the plurality of versions being generated from standard cells in 1-stage form with at least one timing arc separated from an output by no more than one stage, the plurality of variations including the 2-stage cell variation (processing block 101). In one embodiment, a first stage of the variations is of a minimal size driver. In one embodiment, the standard cells are FinFET standard cells. In one embodiment, the standard cells are high drive cells with an increased number of fins in the FinFET transistor, (e.g., an increased transistor diffusion width). In one embodiment, a low drive cell or device is 2 fins or less, while a high drive cell or device is 8 or more fins. Note that in other embodiments, a high drive cell or device has more or less than 8 fins, but more than 2 fins. Note that in one embodiment whether a drive cell or device is considered high depends on the power budget of the device for a given performance envelope. Typical standard cell libraries have progression of higher drive cells with 12 fins, 20 fins, 28 fins, 35 fins, 40 fins, 45 fins, 50 fins, 55 fins, and 60 fins, which often have with very high power dissipation. In one embodiment, width of an input state of a 2-stage cell is independent of width and drive strength of an output stage of the 2-stage cell.

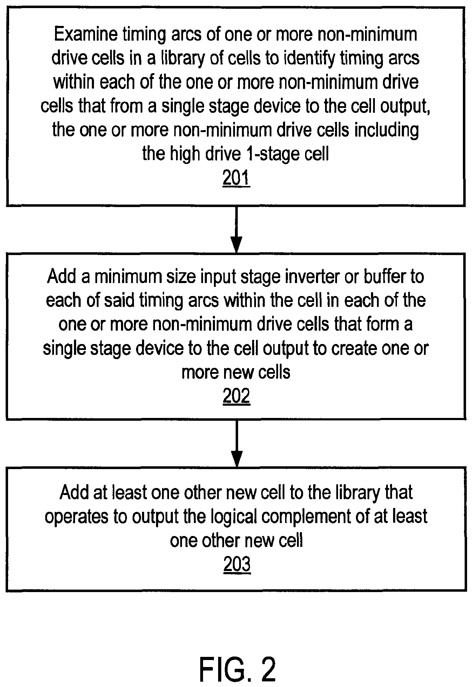

Figure 2 is a flow diagram illustrating one embodiment of a process for creating variations of standard cells in 2-stage form from standard cells in 1-stage form. The process is performed by processing logic that may comprise hardware (circuitry, dedicated logic, etc.), software (such as is run on a general purpose computer system or a dedicated machine), or a combination of both. Referring to Figure 2, the process begins by processing logic examining timing arcs of one or more non-minimum drive cells in a library of cells to identify timing arcs within each of the one or more non-minimum drive cells that form a single stage device to the cell output the one or more non-minimum drive cells including the high drive 1-stage cell (processing block 201). In one embodiment, this identifies a high drive 1-stage cell with at least one 1-stage arc. Next, processing logic adds a minimum size input stage inverter or buffer to each of the timing arcs within the cell in each non-minimum drive cells that form a single stage device to the cell output to create new cells (processing block 202). These new cells include the 2-stage cell variation described above. In one embodiment, this creates a variation of a high drive 1-stage cell in 2-stage form by creating inverted and buffered version with a lower drive than the drive of the high drive cell. Also, processing block adds at least one other new cell to the library that operates to output the logical complement of at least one other new cell (processing block 203). This is performed to compensate for the variation created and added with an input stage invertor to ensure a proper complement is added.

Referring back to Figure 1, after the library has been created, processing logic creates an electronic design for an integrated circuit (IC) chip. The IC chip has at least one logic path. In one embodiment, the logic path is in a FinFET-based standard cell. The IC chip may be a processor, system-on-a-chip (SOC), controller, peripheral, communications processor, etc..

After the design has been created, processing logic performs a design evaluation phase in which a place and routing operation for the IC design is performed (processing block 102).

After performing the place and routing operation, processing logic performs analysis of the electronic design (processing block 103). In one embodiment, this analysis involves determining if the design meets the timing requirements of the design (e.g., timing closure).

Based on results of the timing analysis, processing logic performs a design optimization operation on the IC design, including upsizing drive strength along the logic path by substituting a 2-stage cell variation of a high drive 1-stage cell for another 2-stage cell along the logic path (processing block 104).

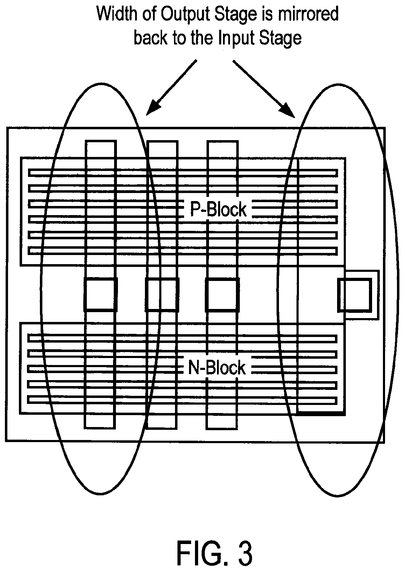

Figures 3-5 provide an example of the use of the techniques described herein.

Figure 3 below shows a typical layout structure of a 1-stage cell. Referring to Figure 3, the width of the output stage is the same as the input stage. In other words, the width of the output stage is mirrored back to the input stage. The output driver has a higher number of fins. This means that the output driver uses wider transistors and has a large drive. Because there is a higher number of fins in the output driver, there is a larger gate surface area at the inputs, which increases the capacitive load seen by the previous stage (e.g., the output state of the cell that precedes the cell of Figure 3). The increase capacitive load slows down that previous stage.

During an optimization operation, an optimization engine that wants to upsize the drive of the 1-stage cell when creating a FinFET design is not able to identify that insertion of a high-drive 1-stage cell causes a negative impact on the design because the output drive strength cannot be isolated from appearing on the input stage as an increased pin-capacitance.

In contrast, a 2-stage cell provides isolation between output stage and input capacitance increase, such that when an optimization engine chooses to upsize a 2-stage cell, the output driver gets upsized, causing the forward network to improve performance, while the previous stage still sees a small capacitance and the previous stage does not slow down as a result. This eliminates the second-order effect which would throw off the simplistic optimization algorithms, which rely on monotonicity, causing them to go into oscillation.

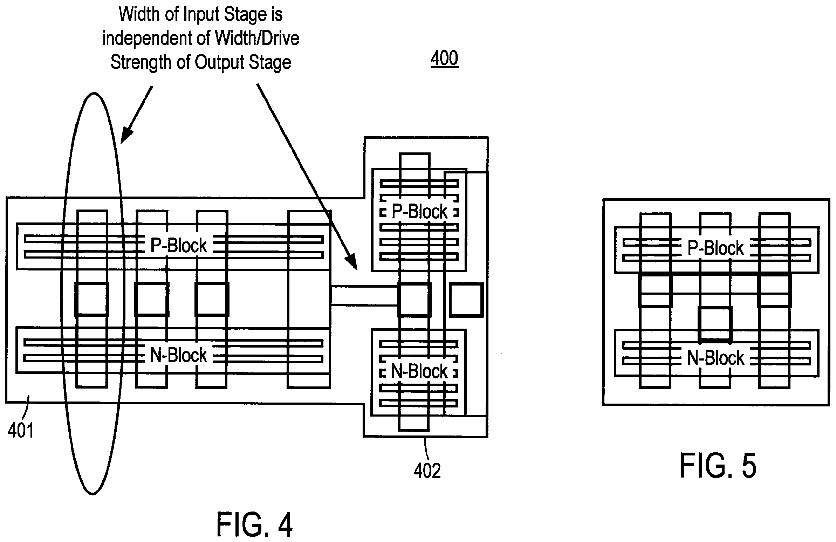

Figure 4 illustrates a typical layout structure of a 2-stage cell. Referring to Figure 4, two-stage cell 400 includes an input, or logic, stage 401 and a drive stage 402. The width of input stage 401 is independent of the width and drive strength of output stage 402. Thus, the output drive of output stage 402 is isolated from the input pin-capacitance associated with input stage 402.

Note that output stage 402 in Figure 4 is drawn to symbolically show the wider transistors to depict drive strength. In one embodiment, the higher drive output driver is implemented using the structure in Figure 5, showing that the output drive strength is achieved through multiple narrower transistors in parallel. This enables the creation of narrow logic gates in the first stage alongside the higher drive output stage using a common-height cell.

Thus, in one embodiment, when creating and/or optimizing a design, particularly a FinFET design, the FinFET collateral (library) has no high-drive strengths for all 1-stage standard-cells. In such cases where high-drive 1-stage standard cells are included in the library, 2-stage variations of such cell has been included and/or created and used in the design instead. This enables creation of a FinFET design (chip) having no high-drive strength 1-stage cells embedded in its logic paths. To that end, during the design process, a mechanism for current CAD tools is included for identifying 1-stage cells in the effort of either excluding them or treating them in a special way during design optimization so that the high-drive 1-stage standard cells are not included.

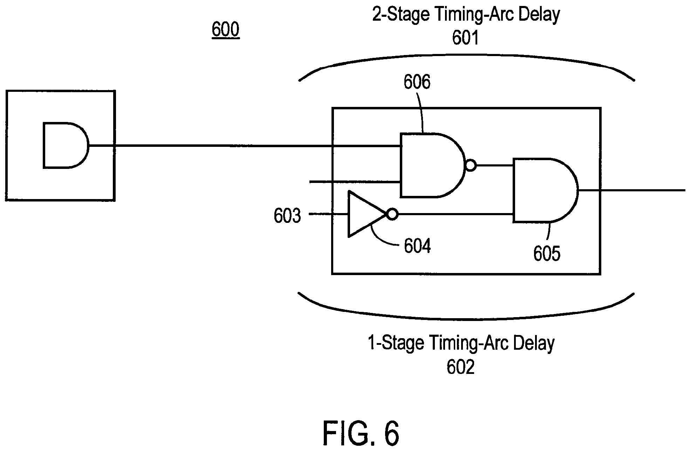

Figure 6 illustrates an example of a 2-stage standard cell created from a 1-stage standard cell. Referring to Figure 6, the cell has a 2-stage timing arc delay 601 and a 1-stage timing arc delay 602. The 1-stage timing arc delay 602 is due to the fact that an input 603 of the cell proceeds directly to the input of the last gate, AND gate 604, in the cell. To ensure that all the timing arcs are separated from the output of the cell by more than 1 stage, a 2-stage version of the 1-stage cell is created by adding inverter 605 to the path between input 603 and AND gate 604.

### An Example of an Electronic Design System

A system is described herein for generating an electronic design of an IC chip having cells embedded in at least one logic path. In one embodiment, the system comprises a memory and a processor that are respectively adapted to: store and execute instructions to create a plurality of variations of standard cells (e.g., FinFET standard cells) in 2-stage form with a range of drive strengths, where the plurality of versions being generated from standard cells in 1-stage form with at least one timing arc separated from an output by no more than one stage; perform a place and routing operation for the electronic design; and perform a design optimization operation on the electronic design, including upsizing drive strength along the at least one logic path by substituting a 2-stage cell variation of a high drive 1-stage cell for another 2-stage cell along the at least one logic path. In one embodiment, the processor examines timing arcs of one or more non-minimum drive cells in a library of cells to identify timing arcs within each of the one or more non-minimum drive cells that form a single stage device to the cell output, where the one or more non-minimum drive cells including the high drive 1-stage cell, and adds a minimum size input stage inverter or buffer to each of said timing arcs within the cell in each of the one or more non-minimum drive cells that form a single stage device to the cell output to create one or more new cells, the one or more new cells including the 2-stage cell variation.

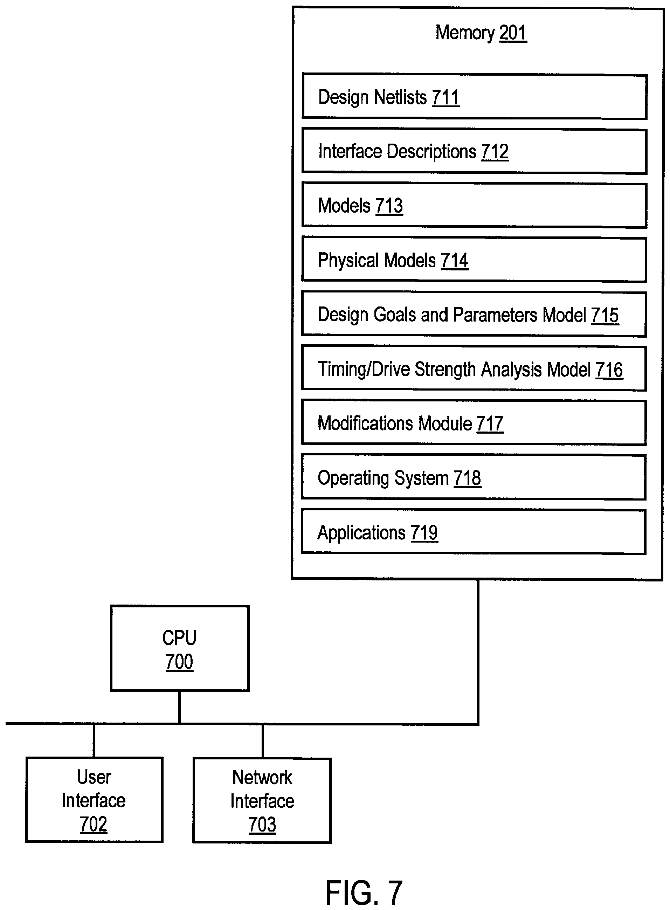

Figure 7 illustrates a system for creating designs of an integrated circuit according to an embodiment of the present invention. In one embodiment, the electronic designs include FinFET designs.

In one embodiment, the method and system for creating designs of an integrated circuit may be implemented using a computer system. The computer system may include one or more central processing units (CPUs) 700, a memory 701, a user interface 702 for displaying portions of the process and results, a system bus 706, and one or more bus interfaces for connecting the CPU, user interface, memory device, and system bus together. The computer system also includes at least one network interface 703 for communicating with other devices on a computer network. In alternative embodiments, the functionality of the method and system for creating designs of an integrated circuit may be implemented in one or more application-specific integrated circuits (ASICs) or field-programmable gate arrays (FPGAs).

Memory device 701 may include high-speed random-access memory and may also include non-volatile memory, such as one or more magnetic disk storage devices. The memory device may also include mass storage that is located remotely from the CPU(s). In one embodiment, memory device 701 stores: a netlist databases 711 for storing information of the circuit, including design netlists, interface descriptions 712, a module 713 that includes models (e.g., timing models, physical models, etc.); design goals and parameters 715; a timing and drive strength analysis module 716 to determine if the design meets timing constraints and performs timing optimizations, including substituting 2-stage cells for 1-stage cells as described herein; a modifications module 717 to create 2-stage variations of 1-stage standard cells as discussed above; an operating system 718 that includes procedures for handling various basic system services and for performing hardware-dependent tasks; and application programs 719 for performing other user-defined applications and tasks.

The databases, the application programs, and the program for creating electronic designs may include executable procedures, sub-modules, tables, and other data structures. In other embodiments, additional or different modules and data structures may be used, and some of the modules and/or data structures listed above may not be used.

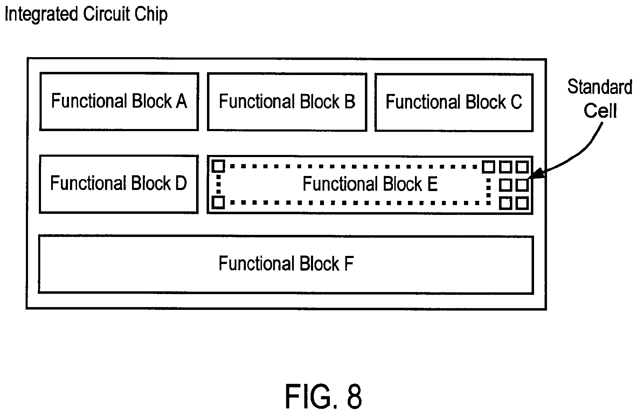

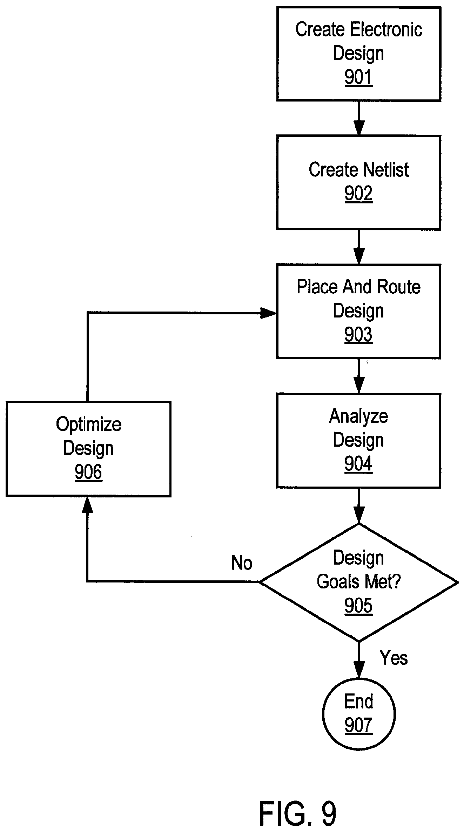

Figure 8 illustrates an integrated circuit design using FinFET standard cells according to an embodiment of the present invention. Referring to Figure 8, the integrated circuit includes a number of logic or functional blocks A, B, C, etc. There may be more or less in number than the number shown in Figure 8. In one embodiment, these logic blocks may perform one or more of the traditional functions of a processor or SoC, such as a CPU core, graphic media processor, input/output, memory control, etc. One or more of these logic includes the standard cells described herein. In one embodiment, the high-device cells are comprised of 2-stages of logic as described above. In one embodiment, each critical path is only comprised of the cells with 2 stages of logic such as described herein. Figure 9 illustrates one embodiment of a process for creating electronic designs (e.g., FinFET designs). Referring to Figure 9, the process begins with the process creating an electronic design in processing block 901. In one embodiment, the process of creating the electronic design includes selecting and using standard cells. In one embodiment, these standard cells are FinFET standard cells. The standard cells are part of a library. In one embodiment, the library includes some 1-stage standard cells and 2-stage variations of the 1-stage standard cells created as described above. Also, in one embodiment, the selection of some standard cells is done to exclude or prevent certain 1-stage standard cells from being selected for inclusion in the design as described above.

After design creation, the process transitions to processing block 902 where the process generates a representative netlist which in turn comprises one or more standard cells. The process of generating a representative netlist may include defining interfaces, creating timing models, and creating physical models. The generation of a representative netlist may be performed automatically by the computer program without user intervention.

At processing block 903, the process places and routes the integrated circuit design. In one embodiment, the functions of processing block 903 may include performing a sizing operation on the design to determine the size of a semiconductor die that is required for the design, placing the input/output ports of the design as well as the cells, including the standard cells. The functions include creating a representative physical implementation using the standard cells.

At processing block 904, the process analyzes the representative physical implementation. In one embodiment, the functions of processing block 904 include analyzing the timing of the representative physical implementation of the integrated circuit to ensure the design has met its timing goals (e.g., determine if the design meets timing closure). In one embodiment, the functions of processing block 904 include analyzing the routing congestions of the representative physical implementation to ensure routing-related design goals are met.

At processing block 905, a determination is made as to whether the design goals are met. If the design goals are met, the process transitions to processing block 907. In the alternative, if the design goals are not met, the process moves to optimization block 908 where design optimizations are performed. In one embodiment, optimization block 908 substitutes 2-stage versions of standard cells in place of 1-stage standard cells as discussed above. The process then transitions to processing 903 where the process repeats until the design goals are met. The process then ends in processing block 907.

In a first example embodiment, an integrated circuit (IC) chip comprises a plurality of logic paths having a plurality of drivers formed from Fin-Shaped Field Effect Transistor (FinFET) transistors, where at least one of the plurality of logic paths has two-stage devices with two-stage timing arcs, and one two-stage device has its input separated from a two-stage device input by an inventor or buffer to provide isolation between an output stage of the two-stage device and input capacitance.

In another example embodiment, the subject matter of the first example embodiment can optionally include that the plurality of drivers is formed from two-stage cells having a logic stage and an output stage, and width of the logic stage is independent of width of the output stage.

In another example embodiment, the subject matter of the first example embodiment can optionally include that the plurality of drivers is formed from two-stage cells having a logic stage and an output stage, and width of the logic stage is independent of drive strength of the output stage.

In another example embodiment, the subject matter of the first example embodiment can optionally include that the plurality of drivers is formed from two-stage cells having a logic stage and an output stage, and the output stage uses parallel transistors matching the logic stage.

In another example embodiment, the subject matter of the first example embodiment can optionally include that the one logic path is without high-drive strength one-stage cells.

In another example embodiment, the subject matter of the first example embodiment can optionally include that the at least one logic cell being a critical path logic cell.

In another example embodiment, the subject matter of the first example embodiment can optionally include that the absence of the inventor or buffer would cause the one two-stage device to have a single stage driver to its output.

In a second example embodiment, a method comprises performing a place and routing operation for an integrated circuit (IC) design having a logic path and performing a design optimization operation on the IC design, including upsizing drive strength along the logic path by substituting a 2-stage cell variation of a first cell having at least one 1-stage arc for another 2-stage cell along the logic path.

In another example embodiment, the subject matter of the second example embodiment can optionally include that the 2-stage variation is created by identifying a the first cell with the at least one 1-stage arc and creating the variation of the high drive cell in 2-stage form.

In another example embodiment, the subject matter of the second example embodiment can optionally include that creating the variation of the first cell in 2-stage form comprises creating an inverted and buffered version of the first cell with a lower drive than the drive of the first cell.

In another example embodiment, the subject matter of the second example embodiment can optionally include that the method further comprise examining timing arcs of one or more non-minimum drive cells in a library of cells to identify timing arcs within each of the one or more non-minimum drive cells that form a single stage device to the cell output, the one or more non-minimum drive cells including the first cell and adding a minimum size input stage inverter or buffer to each of said timing arcs within the first cell in each of the one or more non-minimum drive cells that form a single stage device to the cell output to create one or more new cells, the one or more new cells including the 2-stage cell variation. In another example embodiment, the subject matter of this example embodiment can optionally include that the method further comprise adding another new cell to the library that operates to output the logical complement of the first new cell.

In another example embodiment, the subject matter of the second example embodiment can optionally include that the method further comprises creating a plurality of variations of standard cells in 2-stage form with a range of drive strengths, the plurality of versions being generated from standard cells in 1-stage form with at least one timing arc separated from an output by no more than one stage, the plurality of variations including the 2-stage cell variation.

In another example embodiment, the subject matter of this example embodiment can optionally include that a first stage of the variations is of a minimal size driver. In another example embodiment, the subject matter of this example embodiment can optionally include that the standard cells are high drive cells. In another example embodiment, the subject matter of this example embodiment can optionally include that the standard cells are FinFET standard cells. In another example embodiment, the subject matter of this example embodiment can optionally include that the width of an input state of a 2-stage cell is independent of width and drive strength of an output stage of the 2-stage cell.

In another example embodiment, the subject matter of the second example embodiment can optionally include that the logic path is in a FinFET-based standard cell.

In a third example embodiment, an integrated circuit is created with the method of second example embodiment.

In another example embodiment, the subject matter of the third example embodiment can optionally include a plurality of logic paths having a plurality of drivers formed from FinFET transistors, at least one of the plurality of logic paths having two-stage devices with two-stage timing arcs, wherein one two-stage device has its input separated from a two-stage device input by an inventor or buffer to provide isolation between an output stage of the two-stage device and input capacitance.

In a fourth example embodiment, an article of manufacture has one or more non-transitory computer readable storage media storing instructions which when executed by a system to perform a method for implementing an electronic design, the method comprising performing a place and routing operation for an integrated circuit (IC) design having a logic path and performing a design optimization operation on the IC design, including upsizing drive strength along the logic path by substituting a 2-stage cell variation of a first cell having at least one 1-stage arc for another 2-stage cell along the logic path.

In another example embodiment, the subject matter of the fourth example embodiment can optionally include that the 2-stage variation is created by identifying the first cell with the at least one 1-stage arc and creating the variation of the high drive cell in 2-stage form.

In another example embodiment, the subject matter of the fourth example embodiment can optionally include that creating the variation of the first cell in 2-stage form comprises creating an inverted or buffered version with a lower drive than the drive of the first cell.

In another example embodiment, the subject matter of the fourth example embodiment can optionally include that the method further comprises examining timing arcs of one or more non-minimum drive cells in a library of cells to identify timing arcs within each of the one or more non-minimum drive cells that form a single stage device to the cell output, the one or more non-minimum drive cells including the first cell; and adding a minimum size input stage inverter or buffer to each of said timing arcs within the first cell in each of the one or more non-minimum drive cells that form a single stage device to the cell output to create one or more new cells, the one or more new cells including the 2-stage cell variation.

In another example embodiment, the subject matter of the fourth example embodiment can optionally include that the method further comprises creating a plurality of variations of standard cells in 2-stage form with a range of drive strengths, the plurality of versions being generated from standard cells in 1-stage form with at least one timing arc separated from an output by no more than one stage, the plurality of variations including the 2-stage cell variation. In another example embodiment, the subject matter of this example embodiment can optionally include that the standard cells are FinFET standard cells.

In a fifth example embodiment, a system for generating an electronic design of an IC chip having cells embedded in at least one logic path, the system comprising: a memory and a processor that are respectively adapted to store and execute instructions to create a plurality of variations of standard cells in 2-stage form with a range of drive strengths, the plurality of versions being generated from standard cells in 1-stage form with at least one timing arc separated from an output by no more than one stage; perform a place and routing operation for the electronic design; and perform a design optimization operation on the electronic design, including upsizing drive strength along the at least one logic path by substituting a 2-stage cell variation of a first cell having at least one 1-stage arc for another 2-stage cell along the at least one logic path.

In another example embodiment, the subject matter of the firth example embodiment can optionally include that the processor further to: examine timing arcs of one or more non-minimum drive cells in a library of cells to identify timing arcs within each of the one or more non-minimum drive cells that form a single stage device to the cell output, the one or more non-minimum drive cells including the first cell; and add a minimum size input stage inverter or buffer to each of said timing arcs within the first cell in each of the one or more non-minimum drive cells that form a single stage device to the cell output to create one or more new cells, the one or more new cells including the 2-stage cell variation.

In another example embodiment, the subject matter of the fifth example embodiment can optionally include that the standard cells are FinFET standard cells.

Some portions of the detailed descriptions included herein are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The present invention also relates to apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, and each coupled to a computer system bus.

The algorithms and displays presented herein are not inherently related to any particular computer or other apparatus. Various general purpose systems may be used with programs in accordance with the teachings herein, or it may prove convenient to construct more specialized apparatus to perform the required method steps. The required structure for a variety of these systems will appear from the description below. In addition, the present invention is not described with reference to any particular programming language. It will be appreciated that a variety of programming languages may be used to implement the teachings of the invention as described herein.

A machine-readable medium includes any mechanism for storing or transmitting information in a form readable by a machine (e.g., a computer). For example, a machine-readable medium includes read only memory ("ROM"); random access memory ("RAM"); magnetic disk storage media; optical storage media; flash memory devices; etc.

Whereas many alterations and modifications of the present invention will no doubt become apparent to a person of ordinary skill in the art after having read the foregoing description, it is to be understood that any particular embodiment shown and described by way of illustration is in no way intended to be considered limiting. Therefore, references to details of various embodiments are not intended to limit the scope of the claims which in themselves recite only those features regarded as essential to the invention.

## Claims

1. A method, comprising:
creating a segregated one-stage and two-stage standard cell library comprising creating pruned and augmented cells, said cells comprising Fin-Shaped Field Transistor, FinFET, transistors, wherein creating pruned cells comprises eliminating higher driver version of one-stage cells in the library and presenting only the minimum drive one-stage cells, and wherein creating augmented cells comprises eliminating one-stage arcs of high drive cells by identifying timing arcs of non-minimum drive cells that form a one-stage cell to the cell output, and wherein for each such arc, a minimum size input stage inverter or buffer is added, and the resulting two stage cell and a complement of the resulting cell are included in the library;
creating an integrated circuit design for an integrated circuit comprising a plurality of logic paths by selecting and using standard cells from the library;
creating a physical implementation using the integrated circuit design.

2. The method defined in Claim 1 wherein the two-stage cells (400) have an input stage (401) and an output stage (402), and width of the input stage (401) is independent of width of the output stage (402).

3. The method defined in Claim 1 wherein the two-stage cells (400) have an input stage and an output stage, and width of the input stage (401) is independent of drive strength of the output stage (402).

4. The method defined in Claim 1 wherein the two-stage cells (400) have an input stage (401) and an output stage (402), and the output stage (402) uses narrower parallel transistors.

5. The method defined in Claim 1 wherein a high-drive cell has eight fins or more.

## Patentansprüche

1. Verfahren, das Folgendes umfasst:
Erstellen einer Bibliothek von getrennten ein- und zweistufigen Standardzellen, umfassend das Erstellen gestutzter und erweiterter Zellen, wobei die Zellen finnenförmige Feldtransistor- bzw. FinFET-Transistoren umfassen, wobei das Erstellen gestutzter Zellen das Beseitigen einer höheren Treiberversion von einstufigen Zellen in der Bibliothek und das Präsentieren nur der einstufigen Zellen mit minimaler Ansteuerungsstärke umfasst und wobei das Erstellen erweiterter Zellen das Beseitigen einstufiger Bögen von Zellen mit hoher Ansteuerungsstärke durch Identifizieren von Timing-Bögen von Zellen mit nicht-minimaler Ansteuerungsstärke, die eine einstufige Zelle bilden, zum Zellenausgang umfasst und wobei für jeden solchen Bogen ein Eingangsstufeninverter oder -puffer mit minimaler Größe hinzugefügt wird, und die resultierende zweistufige Zelle und ein Komplement der resultierenden Zelle in die Bibliothek aufgenommen werden;
Erstellen eines Integrierte-Schaltung-Designs für eine integrierte Schaltung, umfassend mehrere Logikpfade, durch Auswählen und Verwenden von Standardzellen aus der Bibliothek;
Erstellen einer physischen Implementierung unter Verwendung des Integrierte-Schaltung-Designs.

2. Verfahren nach Anspruch 1, wobei die zweistufigen Zellen (400) eine Eingangsstufe (401) und eine Ausgangsstufe (402) aufweisen und die Breite der Eingangsstufe (401) unabhängig von der Breite der Ausgangsstufe (402) ist.

3. Verfahren nach Anspruch 1, wobei die zweistufigen Zellen (400) eine Eingangsstufe und eine Ausgangsstufe aufweisen und die Breite der Eingangsstufe (401) unabhängig von der Ansteuerungsstärke der Ausgangsstufe (402) ist.

4. Verfahren nach Anspruch 1, wobei die zweistufigen Zellen (400) eine Eingangsstufe (401) und eine Ausgangsstufe (402) aufweisen und die Ausgangsstufe (402) schmalere parallele Transistoren verwendet.

5. Verfahren nach Anspruch 1, wobei eine Zelle mit hoher Ansteuerungsstärke mindestens acht Finnen aufweist.

## Revendications

1. Procédé, comprenant :
la création d'une bibliothèque de cellules standard séparées en cellules à un étage et cellules à deux étages comprenant la création de cellules élaguées et de cellules augmentées, lesdites cellules comprenant des transistors à effet de champ à ailettes, FinFET, la création de cellules élaguées comprenant l'élimination des cellules à un étage de la bibliothèque ayant une version de pilote élevée et la présentation uniquement des cellules à un étage à puissance de commande minimale, et la création de cellules augmentées comprenant l'élimination d'arcs à un étage de cellules à puissance de commande élevée par identification d'arcs de synchronisation de cellule à puissance de commande non minimale qui forment une celle à un étage sur la sortie de cellule, et, pour chacun de ces arcs, un inverseur ou un tampon d'étage d'entrée de taille minimale étant ajouté, et la cellule à deux étages obtenue et un complément de la cellule obtenue étant inclus dans la bibliothèque ;
la création d'un dessin de circuit intégré pour un circuit intégré comprenant une pluralité de chemins logiques par sélection et utilisation de cellules standard de la bibliothèque ;
la création d'une implémentation physique à l'aide de la structure de circuit intégré.

2. Procédé selon la revendication 1, dans lequel les cellules à deux étages (400) ont un étage d'entrée (401) et un étage de sortie (402), et la largeur de l'étage d'entrée (401) est indépendante de la largeur de l'étage de sortie (402).

3. Procédé selon la revendication 1, dans lequel les cellules à deux étages (400) ont un étage d'entrée et un étage de sortie, et la largeur de l'étage d'entrée (401) est indépendante de l'intensité de la puissance de commande de l'étage de sortie (402).

4. Procédé selon la revendication 1, dans lequel les cellules à deux étages (400) ont un étage d'entrée (401) et un étage de sortie (402), et l'étage de sortie (402) utilise des transistors parallèles plus étroits.

5. Procédé selon la revendication 1, dans lequel une cellule à puissance de commande élevée a huit ailettes ou plus.
